# EUROPÄISCHE PATENTSCHRIFT

(11) **EP 1 355 371 B1**
(45) Veröffentlichungstag und Bekanntmachung des Hinweises auf die Patenterteilung: **13.06.2007**
(21) Anmeldenummer: 02008035.4
(22) Anmeldetag: 10.04.2002
(51) Int. Cl.: H01M 8/04

(54) **Adapter als Alternative für eine Brennstoffpatrone**
Adapter as alternative for a fuel cartridge
Adaptateur comme alternative pour une cartouche à combustible

(43) Veröffentlichungstag der Anmeldung: 22.10.2003
(73) Patentinhaber: SFC Smart Fuel Cell AG, 85649 Brunnthal-Nord (DE)
(72) Erfinder: Müller, Jens, Dr., 81827 München (DE); Stefener, Manfred, 80538 München (DE)
(74) Vertreter: Grünecker, Kinkeldey, Stockmair & Schwanhäusser Anwaltssozietät

(56) Entgegenhaltungen:
- EP-A- 0 813 264
- EP-A- 1 197 299
- JP-A- 6 310 166
- US-A- 3 476 158
- US-A- 4 545 759
- US-B1- 6 268 077
- US-B1- 6 326 097

## Beschreibung

### Gebiet der Erfindung

Die Erfindung betrifft die Erweiterung der Einsatzmöglichkeiten von auf Brennstoffpatronenbetrieb ausgelegten Verbrauchem durch Breitstellung von Adaptereinrichtungen.

### Stand der Technik

Aufgrund der beträchtlichen technologischen Fortschritte innerhalb der letzten Jahre sind Brennstoffzellen eine ernstzunehmende Alternative zu Batterien und Akkus geworden. Einer der letzten Vorteile von Akkus und Batterien in mobilen Einsatzbereichen war deren Benutzerfreundlichkeit, die sich auf universeller Verfügbarkeit und leichter Handhabbarkeit gründet. Aber auch auf diesem Gebiet hat die Brennstoffzellentechnologie aufgeholt: So sind zur Brennstoffversorgung von Brennstoffzellen auswechselbare Einwegoder Mehrweg-Brennstoffpatronen vorgesehen, die ähnlich einfach wie Batterien handhabbar sind und die zur Verbindung mit den Brennstoffzellen an Patronenanschlusseinrichtungen angekoppelt werden (bspw. durch Einsetzen in ein Patronenfach), die mit einer geeigneten Schnittstelle zur Brennstoffentnahme eingerichtet sind. Solche Patronen werden in der europäischen Patentanmeldung EP-A-1313160 beschrieben.

Auch wenn die Betriebsdauern elektrischer Verbraucher bei der Verwendung derartiger Patronen diejenigen bei der Verwendung gleichdimensionierter Batterien um ein Vielfaches übertreffen können, so ist oftmals doch eine die Kapazität einer Patronenfüllung übersteigende unterbrechungsfreie Laufzeit ("Endlosbetrieb") erwünscht. Darüber hinaus wäre insbesondere bei solchen Geräten, die gleichermaßen in mobilen und stationären Einsatzbereichen verwendet werden, die Wahlmöglichkeit zwischen einer Brennstoffversorgung über eine Brennstoffpatrone oder einen stationären Brennstofftank vorteilhaft.

Aus der US 4,720,259 ist eine tragbare Brennervorrichtung mit einer Kupplung für eine Propangasflasche bekannt.

Die US 5,542,098 beschreibt einen LPG-Tank, der über einen Adapter an ein Versorgungssystem angeschlossen wird.

Angesichts dieser Aspekte ist es eine Aufgabe der Erfindung, das Einsatzpotenzial von auf Brennstoffpatronenversorgung eingerichteten Vorrichtungen zu erweitern und somit ganz allgemein die Einsatzmöglichkeiten der Brennstoffzellentechnologie zu verbessern.

### Beschreibung der Erfindung

Die oben beschriebene Aufgabe wird erfindungsgemäß durch die Systeme mit den Merkmalen der Ansprüche 1 und 6 gelöst. Gemäß diesen Merkmalen können die Adapterpatrone bzw. der Adapteraufsatz anstelle einer Brennstoffpatrone verwendet werden, um einen Verbraucher über eine Brennstoffversorgungseinrichtung (beispielweise einen stationären Brennstofftank) mit Brennstoff zu versorgen.

Die erfindungsgemäße Adapterpatrone für die Brennstoffversorgung einer auf Brennstoffpatronenbetrieb eingerichteten Vorrichtung umfasst eine Brennstoffzufuhreinrichtung und eine verbraucherseitige Schnittstelle zur Brennstoffabgabe, welche gemäß der entsprechenden Schnittstelle der Brennstoffpatrone ausgebildet ist.

Die Brennstoffzufuhreinrichtung der Adapterpatrone ist oder wird über eine Brennstoffleitung mit einem Brennstofftank verbunden. Diese Leitung ist vorzugsweise flexibel, so dass die Adapterpatrone mit geringen Einschränkungen im wesentlichen frei bezüglich des Tanks bewegbar ist. Die Adapterpatrone wird wie eine Brennstoffpatrone in die entsprechende Vorrichtung des Brennstoffverbrauchers eingesetzt.

Brennstoffpatronen sind sowohl für kontinuierliche Versorgung eines Verbrauchers, als auch als Nachfüllkartusche zum Befüllen eines internen Brennstofftanks des Verbrauchers vorgeschlagen worden. Für beide Aufgaben ist die erfindungsgemäße Adapterpatrone gleichermaßen geeignet.

Zur Erhöhung der Benutzerfreundlichkeit und im Hinblick auf eine möglichst sichere Handhabung der Adapterpatrone ist deren Gehäuse dem Brennstoffpatronengehäuse nachgebildet. Dies betrifft insbesondere solche Gehäuseteile und Gehäuseeinrichtungen der Brennstoffpatrone, die ihrem Einsetzen in ein verbraucherseitiges Patronenfach und der Halterung darin dienen. Dadurch können Einrichtungen, die verbraucherseitig und/oder patronenseitig zum Einsetzen und/oder Haltern vorgesehen sind, vorteilhaft auch bei der Adapterpatrone verwendet werden.

Obwohl die Adapterpatrone mit einer Vorratskammer eingerichtet sein kann, in der eine gewisse Brennstoffmenge zwischengespeichert wird, so besteht der Hauptzweck der Adapterpatrone in der Ausbildung einer Fluidverbindung zwischen Brennstofftank und Brennstoffverbraucher. Somit dient eine besonders einfache und daher bevorzugte Weiterbildung der Adapterpatrone lediglich dem Brennstoffdurchfluss (ohne Speicherung) und ist zu diesem Zwecke mit einer Brennstoffdurchführung von der Brennstoffzufuhreinrichtung zur Schnittstelle für die Brennstoffabgabe ausgestattet, auch wenn bei dieser Ausführung unter Umständen ein Teil des Innenvolumens der Adapterpatrone ungenutzt bleibt.

Die Brennstofflörderung kann vielfach durch Schwerkraftwirkung, Überdruck im Brennstofftank, oder eine Fördereinrichtung auf Seite des Tanks oder auf Seite des Verbrauchers erfolgen. Falls erforderlich, kann eine Brennstofffördereinrichtung, beispielsweise eine peristaltische Pumpe oder eine Mikropumpe, in der Adapterpatrone vorgesehen sein.

Je nach Einsatzgebiet kann eine der folgenden beiden alternativen Weiterbildungen vorteilhaft sein, bei der die zufuhrseitige Brennstoffzufuhreinrichtung der Adapterpatrone entweder eine integral mit der Adapterpatrone gebildete Brennstoffzuleitung aufweist, oder einen Steck- oder Schraubanschluss o.ä. zum Verbinden mit einer entsprechend ausgebildeten Brennstoffzuleitung umfasst.

Der erfindungsgemäße Adapteraufsatz für die Brennstoffversorgung einer auf Brennstoffpatronenbetrieb eingerichteten Vorrichtung umfasst eine zufuhrseitige Schnittstelle, die zur Befestigung an einer Brennstoffversorgungseinrichtung, beispielsweise einem Brennstofftank oder einer Versorgungsleitung, und zur Ausbildung einer Fluidverbindung zwischen dem Adapteraufsatz und der Brennstoffversorgungseinrichtung ausgebildet ist, sowie eine Schnittstelle zur Brennstoffabgabe, welche gemäß der entsprechenden Schnittstelle der Brennstoffpatrone ausgebildet ist.

Der Adapteraufsatz wird fest mit der Brennstoffversorgungseinrichtung, beispielsweise dem Brennstofftank, verbunden. Der Verbraucher wird zur Brennstoffentnahme mit seiner Schnittstelleneinrichtung auf den Adapteraufsatz aufgesetzt und kann in dieser Anordnung betrieben werden.

Ein verbraucherseitiger Abschnitt des Adapteraufsatzes ist der äußeren Form des Brennstoffpatronengehäuses nachgebildet, so dass eine unkomplizierte Verbindung mit der Schnittstelleneinrichtung des Verbrauchers möglich ist.

Falls der Brennstofftank nicht zu groß und nicht fest installiert ist, so ist auch bei dieser Konfiguration eine gewisse Mobilität gewährleistet. Besonders geeignet ist der Adapteraufsatz aber zum Nachfüllen von internen Brennstofftanks in Verbrauchern, d.h. als Alternative zu als Nachfüllkartuschen verwendeten Brennstoffpatronen.

Wie bei der oben beschriebenen Adapterpatrone kann auch der Adapteraufsatz in einer einfachen und daher besonders bevorzugen Weiterbildung mit einer Brennstoffdurchführung von der tankseitigen Schnittstelle zur Schnittstelle für die Brennstoffabgabe ausgebildet sein, d.h. der Aufsatz dient nicht der Brennstoff(zwischen)speicherung, sondern allein dem Brennstoffdurchfluss.

In einer vorteilhaften Weiterbildung umfasst die tankseitige Schnittstelle des Adapteraufsatzes eine Betätigungseinrichtung, die bei Befestigung des Adapteraufsatzes an dem Brennstofftank ein Auslassventil des Brennstofftanks öffnet. Zur Brennstoffentnahme muss dann die entsprechende Schnittstelle des Verbrauchers nur noch auf den Adapteraufsatz aufgesetzt werden.

Wie schon im Falle der Adapterpatrone kann auch bei solchen Ausführungen des Adapteraufsatzes, in denen das Innere hauptsächlich oder ausschließlich der Brennstoffdurchführung dient, eine Brennstofffördereinrichtung, bspw. eine peristaltische Pumpe oder eine Mikropumpe, im Adapteraufsatz vorgesehen sein.

In diesem Zusammenhang kann eine Brennstoffversorgungseinrichtung verwendet werden, die mit einer Anschlusseinrichtung für die Verbindung mit einer tankseitigen Schnittstelle eines erfindungsgemäßen Adapteraufsatzes ausgebildet ist. Zusätzlich oder alternativ dazu kann der Brennstofftank einen fest an ihm angebrachten Adapteraufsatz aufweisen.

Weiterhin kann eine Brennstoffversorgungsleitung zum Anschluss eines Verbrauchers an diese Brennstoffversorgungseinrichtung verwendet werden. Brennstoffversorgungsleitung umfasst einer obengennanten Adapterpatronen (für den Anschluss eines Verbrauchers), eine Schnittstelleneinrichtung (für den Anschluss an die Brennstoffversorgungseinrichtung), und eine (bevorzugt flexibel ausgebildete) Brennstoffleitung. Diese Brennstoffversorgungsleitung dient gewissermaßen als "Verlängerungskabel" zur Brennstoffversorgung.

Bevorzugte Ausführungsformen werden nachfolgend unter Bezugnahme auf die beigefügten Figuren beschrieben.

Es zeigen:
- Fig. 1A:: eine Brennstoffpatrone;
- Fig. 1B:: eine verbraucherseitige Schnittstelleneinrichtung zur Aufnahme der Brennstoffpatrone von Fig. 1A:
- Fig. 1C:: die Brennstoffpatrone von Fig. 1A eingesetzt in die verbraucherseitige Schnittstelleneinrichtung von Fig. 1B;
- Fig. 2A:: eine erste bevorzugte Ausbildungsform der erfindungsgemäßen Adapterpatrone;
- Fig. 2B:: eine zweite bevorzugte Ausbildungsform der erfindungsgemäßen Adapterpatrone;
- Fig. 3A:: eine bevorzugte Ausbildungsform des erfindungsgemäßen Adapteraufsatzes;
- Fig. 3B:: einen Brennstofftank mit einer Anschlusseinrichtung für die Verbindung mit der tankseitigen Schnittstelle des Adapteraufsatzes von Fig. 3A;
- Fig. 3C:: den Brennstofftank von Fig. 3B in Fluidverbindung mit dem Adapteraufsatz von Fig. 3A.

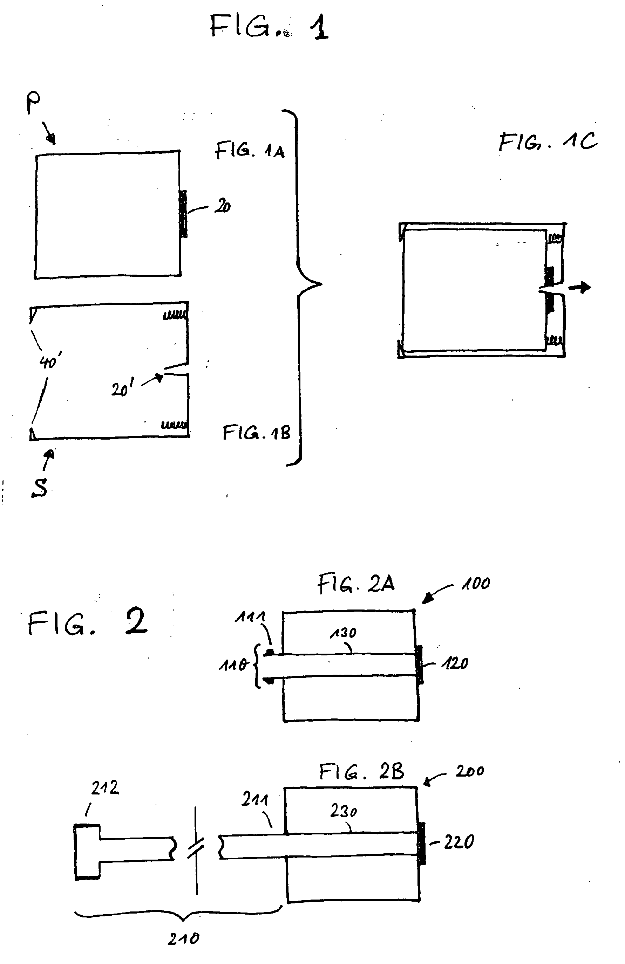

Die Figuren 1A -1C zeigen eine Brennstoffpatrone P, eine verbraucherseitige Schnittstelleneinrichtung S zur Aufnahme der Brennstoffpatrone P, und beides in Kombination.

Die Brennstoffpatrone P und die verbraucherseitige Schnittstelleneinrichtung S sind aufeinander abgestimmt und bevorzugt so ausgebildet, dass die Patrone P beim Einführen in die Schnittstelleneinrichtung S in dieser einrastet und die Schnittstelle 20 zur Brennstoffentnahme beim Einführvorgang durch eine komplementäre Einrichtung 20' der Schnittstelleneinrichtung S geöffnet wird. Hinsichtlich der Einzelheiten wird auf die europäische Patentanmeldung EP-A-1 313 160 verwiesen.

Fig. 2A zeigt eine erste bevorzugte Ausführungsform einer Adapterpatrone 100, die zur alternativen Verwendung anstelle der Brennstoffpatrone P von Fig. 1A ausgebildet ist. Was die äußere Form anbelangt, so unterscheidet sie sich von der Brennstoffpatrone P nur durch die Brennstoffzufuhreinrichtung 110, die beispielsweise als Steckkupplungsanschluss 111 ausgebildet sein kann.

Die Ausführungsform von Fig. 2A ist mit einer Brennstoffdurchführung 130 versehen, die die Brennstoffzufuhreinrichtung 110 mit der Brennstoffentnahmeschnittstelle 120 verbindet (Alternativ dazu könnte der gesamte Innenraum der Adapterpatrone 100 zur Brennstoffdurchführung oder teilweisen Zwischenspeicherung genutzt werden.) Mit Ausnahme dieser Durchführung 130 kommt bei dieser Ausführungsform dem Inneren des Adapters 100 keine funktionelle Bedeutung zu. Die Adapterpatrone 100 wird wie die Brennstoffpatrone P einfach in die Schnittstellenvorrichtung S des Verbrauchers eingesetzt. Die zu Patrone P weitgehend identische äußere Form ist zweckmäßig, damit die Elemente, die zur Führung und sicheren Halterung vorgesehen sind, auch bei der Verwendung der Adapterpatrone 100 zum Tragen kommen. Solange diese Funktionen gewährleistet sind, können aber auch Abweichungen in der äußeren Form möglich sein.

Sowohl die Brennstoffzufuhreinrichtung 110, als auch die Schnittstelle 120 können mit (Rückschlag-)Ventilen versehen sein, die sichere Verbindungen gewährleisten und Fluidaustritt verhindernden Ein-/Ausbau des Adapters ermöglichen.

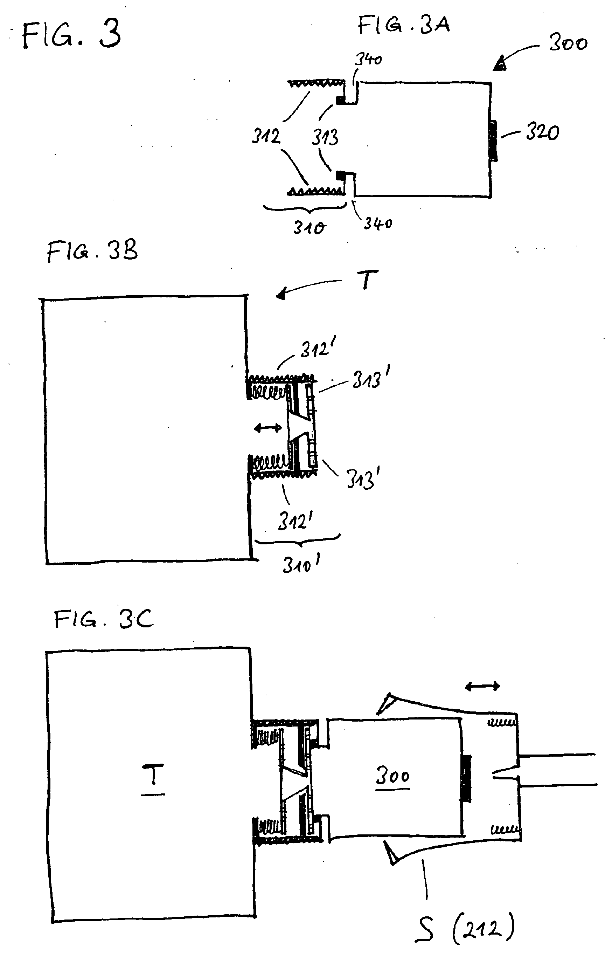

Fig. 2B zeigt eine alternative Adapterpatrone 200, deren Zufuhrseite 210 eine fest vorgesehen Brennstoffleitung 211 aufweist. Das andere Ende der Leitung weist ein Anschlussstück 212 auf, das beispielsweise ein herkömmliches Steckkupplungsstück sein kann. Dieses Anschlussstück 212 wird an einen Brennstofftank oder eine Versorgungsleitung angeschlossen. Weitere Einzelheiten des Adapters entsprechen im Wesentlichen denjenigen der Ausführungsform von Fig. 2A und ihre Beschreibung bedarf keiner Wiederholung. Im Zusammenhang mit der nachfolgend beschriebenen Fig. 3 und der erfindungsgemäßen Brennstoffversorgungsleitung sei vorweggenommen, dass das versorgungsseitige Ende 212 des Adapters 200 im wesentlichen wie die in Fig. 1B skizzierte Schnittstelleneinrichtung S ausgebildet sein kann, so dass diese Ausführungsform als Brennstoffzufuhrverlängerungsleitung verwendet werden kann.

Fig. 3A ist eine schematische Abbildung einer bevorzugten Ausführungsform des erfindungsgemäßen Adapteraufsatzes 300. Er weist eine tankseitige Schnittstelle 310 auf, die beispielsweise ein Schraubgewinde 312 zur festen Verbindung mit einem Brennstofftank T (oder altemativ: zum Anschluss an einer Versorgungsleitung) aufweist.

Der verbraucherseitige Abschnitt des Adapteraufsatzes 300 weist eine Schnittstelle 320 auf, die wie die oben beschriebenen Schnittstellen 120, 220 der Adapterpatronen 100, 200 in Analogie zur Schnittstelle 20 der zu ersetzenden Brennstoffpatrone P ausgebildet ist. Darüber hinaus ist dieser Abschnitt so ausgebildet, dass er eine einfache Verbindung mit der Schnittstelleneinrichtung S ermöglicht. Zu diesem Zweck sind beispielsweise Einkerbungen 340 im Gehäuse vorgesehen, mit denen Rückhaltedomen 40' der Schnittstelleneinrichtung S in Eingriff kommen können.

Eine zur Verbindung mit der Schnittstelle 310 des Aufsatzes 300 ausgebildete Schnittstelle 310' ist in Fig. 3B skizziert. Diese ist an einem Brennstofftank T vorgesehen und weist ein Außengewinde 312' auf, um die mechanische Verbindung mit dem entsprechenden Gewinde 312 des Aufsatzes zu ermöglichen. Anstelle einer Schraubverbindung sind natürlich auch andere reversible Verbindungseinrichtungen möglich.

Zur Herstellung einer Fluidverbindung zwischen Tank T und Aufsatz 300 kann die Schnittstelle 310' des Tanks T beispielsweise ein Tellerventil 313' aufweisen, das durch eine entsprechende Betätigungseinrichtung 313 des Aufsatzes geöffnet wird. Bei der skizzierten Ausbildung ist die Betätigungseinrichtung 313 eine starre Einrichtung, so dass die Öffnung bei Herstellung der Verbindung automatisch erfolgt. Falls erwünscht, kann die Betätigungseinrichtung aber auch derart ausgebildet sein, dass sie erst nach separater (mechanischer, elektrischer, oder magnetischer) Aktivierung die Fluidverbindung herstellt. Sie muss in diesem Fall auch nicht auf Seite des Aufsatzes 300 vorgesehen sein, sondern kann genauso gut in die Schnittstelle 310' integriert sein.

Fig. 3C zeigt den Aufsatz von Fig. 3A, der auf den Tank T von Fig. 3B aufgesetzt ist, so dass eine Fluidverbindung hergestellt ist. Im vorliegenden Fall wird der Einfachheit halber angenommen, dass der Tank T druckbeaufschlagt ist und demzufolge auch das Innere des Aufsatzes 300 mit druckbeaufschlagtem Brennstoff gefüllt ist.

Die Brennstoffversorgung eines auf Patronenbetrieb ausgelegten Verbrauchers kann nun durch Aufsetzen der Schnittstelle S desselben auf den Aufsatz 300 erfolgen. Wenn der Verbraucher über einen internen Brennstofftank verfügt, so kann dieser hierdurch befüllt werden. Ist dies nicht der Fall, so ist der Betrieb des Verbrauchers im aufgesetzten Zustand möglich. Eine weitere, besonders vorteilhafte Einsatzmöglichkeit der Erfindung besteht darin, die Vorrichtung von Fig. 2B mit einer der Schnittstelleneinrichtung S entsprechenden Schnittstelle 212 auszubilden, und diese Vorrichtung als Brennstoffzufuhrverlängerungsleitung zu verwenden, was eine gewisse Mobilität bei der Verwendung des Verbrauchers ermöglicht.

## Patentansprüche

1. System, umfassend:
eine auf Brennstoffpatronenbetrieb eingerichtete Brennstoffzellen - Vorrichtung mit einer Schnittstellenvorrichtung mit einem Patronenfach zur Aufnahme und Halterung einer Brennstoffpatrone; und
eine Adapterpatrone (100, 200) für die Brennstoffversorgung der Brennstoffzellen - Vorrichtung anstelle der Brennstoffpatrone mit:
einer Brennstoffzufuhreinrichtung (110, 210) zum Verbinden der Adapterpatrone mit einer Brennstoffversorgungseinrichtung (T), und
einer Schnittstelle (120, 220) zur Brennstoffabgabe, welche gemäß der entsprechenden Schnittstelle (20) der Brennstoffpatrone (P) ausgebildet ist, wobei
die Adapterpatrone ein Gehäuse aufweist, das dem Brennstoffpatronengehäuse nachgebildet ist, so daß die Adapterpatrone in die Schnittstellenvorrichtung eingesetzt und darin gehaltert werden kann.

2. System nach Anspruch 1, mit einer Brennstoffdurchführung (130) von der Brennstoffzufuhreinrichtung zur Schnittstelle für die Brennstoffabgabe.

3. System nach einem der vorangegangenen Ansprüche, wobei die Adapterpatrone eine Brennstofffördereinrichtung aufweist.

4. System nach einem der vorangegangenen Ansprüche, bei welcher die Brennstoffzufuhreinrichtung (210) eine Brennstoffzuleitung (212) umfasst.

5. System nach einem der Ansprüche 1 bis 3, bei welcher die Brennstoffzufuhreinrichtung (110) einen Anschluss (111) für eine Brennstoffzuleitung umfasst.

6. System, umfassend:
eine auf Brennstoffpatronenbetrieb eingerichtete Brennstoffzellen-Vorrichtung mit einer Schnittstellenvorrichtung mit einem Patronenfach zur Aufnahme und Halterung einer Brennstoffpatrone; und
einen Adapteraufsatz (300) für die Brennstoffversorgung der Brennstoffzellen-Vorrichtung anstelle der Brennstoffpatrone, mit:
einer zufuhrseitigen Schnittstelle (310), die zur Befestigung an einer Brennstoffversorgungseinrichtung (T) und zur Ausbildung einer Fluidverbindung zwischen dem Adapteraufsatz (300) und der Brennstoffversorgungseinrichtung (T) ausgebildet ist, und
einer Schnittstelle (320) zur Brennstoffabgabe, welche gemäß der entsprechenden Schnittstelle (20) der Brennstoffpatrone (P) ausgebildet ist, wobei
ein verbraucherseitiger Abschnitt des Adapteraufsatzes der äußeren Form des Brennstoffpatronengehäuses nachgebildet ist, so daß der verbraucherseitige Abschnitt des Adapteraufsatzes in die Schnittstellenvorrichtung eingesetzt und darin gehaltert werden kann.

7. System nach Anspruch 6, mit einer Brennstoffdurchführung von der zufuhrseitigen Schnittstelle (310) zur Schnittstelle (320) für die Brennstoffabgabe.

8. System nach einem der Ansprüche 6 oder 7, bei welchem die zufuhrseitige Schnittstelle (310) eine Betätigungseinrichtung (313) umfasst, die bei Befestigung des Adapteraufsatzes an der Brennstoffversorgungseinrichtung (T) ein Auslassventil der Versorgungseinrichtung (T) öffnet.

9. System nach einem der Ansprüche 6 bis 8, wobei der Adapteraufsatz eine Brennstofffördereinrichtung aufweist.

## Claims

1. System, comprising: A fuel cell device, set up for fuel cartridge operation, with an interface device with a cartridge compartment for accommodating and holding a fuel cartridge, and an adapter cartridge (100, 200) for supplying fuel to the fuel cell device in place of the fuel cartridge with:
a fuel feed device (110, 210) for connecting the adapter cartridge to a fuel supply device (T), and
an interface (120, 220) for the release of fuel, which is formed according to the corresponding interface (20) of the fuel cartridge (P), wherein
the adapter cartridge comprises a housing which replicates the fuel cartridge housing, so that the adapter cartridge can be inserted into the interface device and retained therein.

2. System according to Claim 1, with a fuel duct (130) from the fuel feed device to the interface for the fuel release.

3. System according to one of the previous claims, wherein the adapter cartridge comprises a fuel conveyance device.

4. System according to one of the previous claims, in which the fuel feed device (210) comprises a fuel feed pipe (212).

5. System according to one of the Claims 1 to 3, in which the fuel feed device (110) comprises a connection (111) for a fuel feed pipe.

6. System comprising: A fuel cell device, set up for fuel cartridge operation, with an interface device with a cartridge compartment for accommodating and holding a fuel cartridge, and an adapter top unit (300) for supplying fuel to the fuel cell device in place of the fuel cartridge with:
a feed-side interface (310), which is formed for attachment to a fuel supply device (T) and for the formation of a fluid connection between the adapter top unit (300) and the fuel supply device (T), and
an interface (320) for releasing the fuel, which is formed according to the corresponding interface (20) of the fuel cartridge (P), wherein a load-side section of the adapter top unit replicates the external shape of the fuel cartridge housing, so that the load-side section of the adapter top unit can be inserted into the interface device and retained therein.

7. System according to Claim 6, with a fuel duct from the feed side of the interface (310) to the interface (320) for the fuel release.

8. System according to one of the Claims 6 or 7, in which the interface on the feed side (310) comprises an actuating device (313), which opens an outlet valve of the supply device (T) when the adapter top unit is attached to the fuel supply device (T).

9. System according to one of the Claims 6 to 8, wherein the adapter top unit comprises a fuel feed device.

## Revendications

1. Système comportant :
- un dispositif de cellules de combustible, conçu pour le fonctionnement d'une cartouche de combustible et comportant un dispositif d'interface avec un logement destiné à recevoir et maintenir une cartouche de combustible ; et
- une cartouche d'adaptation (100, 200) pour l'alimentation en combustible du dispositif de cellules de combustible en lieu et place de la cartouche de combustible, laquelle est munie
- d'un dispositif de recharge du combustible (110, 210) pour relier la cartouche d'adaptation à un dispositif d'alimentation en combustible (T), et
- d'une interface (120, 220) pour la distribution de combustible, qui est réalisée conformément à l'interface (20) correspondante de la cartouche de combustible (P), sachant que
- la cartouche d'adaptation comporte un boîtier qui est conçu de manière identique au boîtier de la cartouche de combustible, de telle sorte que la cartouche d'adaptation peut être introduite dans le dispositif d'interface et être maintenue dans celui-ci.

2. Système selon la revendication 1, comportant un passage de combustible (130) menant du dispositif de recharge du combustible vers l'interface pour la distribution du combustible.

3. Système selon l'une quelconque des revendications précédentes, dans lequel la cartouche d'adaptation comporte un dispositif de transport du combustible.

4. Système selon l'une quelconque des revendications précédentes, dans lequel le dispositif de recharge du combustible (210) comporte une conduite d'admission du combustible (212).

5. Système selon l'une quelconque des revendications 1 à 3, dans lequel le dispositif de recharge du combustible (110) comporte un raccord (111) pour une conduite d'admission du combustible.

6. Système comportant :
- un dispositif de cellules de combustible, conçu pour le fonctionnement d'une cartouche de combustible et comportant un dispositif d'interface avec un logement destiné à recevoir et maintenir une cartouche de combustible ; et
- un adaptateur rapporté (300) pour l'alimentation en combustible du dispositif de cellules de combustible en lieu et place de la cartouche de combustible, lequel est muni
- d'une interface (310) du côté admission, qui est conçue pour être fixée sur un dispositif d'alimentation de combustible (T) et pour réaliser une liaison fluidique entre l'adaptateur rapporté (300) et le dispositif d'alimentation de combustible (T), et
- d'une interface (320) pour la distribution de combustible, qui est réalisée conformément à l'interface (20) correspondante de la cartouche de combustible (P), sachant que
- une partie, du côté consommateur, de l'adaptateur rapporté est conçue avec une forme identique à la forme extérieure du boîtier de la cartouche de combustible, de telle sorte que la partie, du côté consommateur, de l'adaptateur rapporté peut être introduite dans le dispositif d'interface et être maintenue dans celui-ci.

7. Système selon la revendication 6, comportant un passage de combustible menant depuis l'interface (310) du côté admission vers l'interface (320) pour la distribution du combustible.

8. Système selon la revendication 6 ou 7, dans lequel l'interface (310) du côté admission comporte un dispositif d'actionnement (313) qui, lors de la fixation de l'adaptateur rapporté sur le dispositif d'alimentation de combustible (T), ouvre une vanne de sortie du dispositif d'alimentation de combustible (T).

9. Système selon l'une quelconque des revendications 6 à 8, dans lequel l'adaptateur rapporté comporte un dispositif de transport du combustible.
